# EUROPEAN PATENT SPECIFICATION

(11) **EP 1 731 579 B1**
(45) Date of publication and mention of the grant of the patent: **22.10.2008**
(21) Application number: 06010791.9
(22) Date of filing: 26.05.2006
(51) Int. Cl.: C09D 11/16

(54) **Ink composition and writing instrument**
Tintenzusammensetzung und Schreibinstrument
Composition d'encre et instrument d'écriture

(30) Priority: 08.06.2005 JP 2005168451
(43) Date of publication of application: 13.12.2006
(73) Proprietor: Adger Kogyo Co. Ltd., Soka-shi Saitama-ken (JP)
(72) Inventor: Iijima, Zenshiro c/oAdger Kogyo Co. Ltd, Saitama-Ken (JP)
(74) Representative: Luderschmidt, Schüler & Partner

(56) References cited:
- EP-A- 0 393 901
- EP-A- 1 088 863
- EP-A- 1 251 154
- US-A1- 2004 194 660
- US-B1- 6 332 943

## Description

This invention relates to an ink composition giving white ink images which are erasable by wiping with a wet cloth impregnated with water. The present invention is also concerned with a writing instrument utilizing the above ink.

### Description of Prior Art:

Various erasable inks are known and are utilized in the field of, for example, sewing or arts and crafts (U.S. Pat. Nos. 4,368,076, 4,441,928 and 4,509,982). The known erasable inks now on the market, however, are predominantly of a type which gives colored ink images and, therefore, are not suited for writing on a dark-colored surface. Known white colored inks generally contain a white pigment or dye, such as titanium white, and are not easily erasable.

U.S. Pat. No. 4,744,826 discloses an aqueous transparent ink composition affording erasable, white ink images. This composition contains an amine complex salt of zinc and has a problem because odor of ammonia emanates upon use. U.S. Pat. No. 4,840,833 discloses an ink composition containing a fine powder of white colored water soluble alkali salt of aliphatic sulfate dispersed in a monohydric alcohol. The ink is suited for preparing a pressure sensitive reproducing material. When used with a felt tip pen, however, the ink is apt to cause clogging. U.S. Pat. No. 5,082,495 discloses an ink composition giving erasable, white ink images. This composition contains an organic solvent, salicyclic acid or acetylsalicyclic acid dissolved in the organic solvent and a polymer which is dissolved in the organic solvent and which has a molecular weight of at least 10,000. Because salicyclic acid and acetylsalicyclic acid are sublimable substances, the white images are spontaneously erased with time. Thus, the ink images cannot be kept unerased for a necessary period of time.

The present invention has been made in view of the foregoing problems of the prior art ink.

In accordance with one aspect of the present invention there is provided a colorless, transparent ink composition comprising water and sodium benzoate dissolved in the water in an amount of at least 5 parts by weight per 100 parts by weight of the water, said composition giving a white image when applied to an ink receiving surface.

In another aspect the present invention provides a writing instrument having a pen tip and an ink tank which contains the above ink composition and which is in fluid communication with the pen tip.

The ink composition of the present invention is colorless and transparent. When applied on a fabric, paper, leather, metal, wood, plastic or the like ink receiving surface, however, the written image turns white as the water evaporates. The resulting white ink image does not spontaneously disappear but may be easily removed by, for example, wiping with a wet cloth or a sponge impregnated with water, when necessary.

The present invention will be described in detail below.

The ink composition of the present invention should contain water and sodium benzoate dissolved in the water in an amount of at least 5 parts by weight per 100 parts by weight of the water. An amount of the sodium benzoate below 5 parts by weight is insufficient to obtain a clear ink image on an ink applied surface. The amount of the sodium benzoate is preferably at least 15 parts by weight, more preferably at least 30 parts by weight, per 100 parts by weight of the water. The upper limit concentration is the solubility of sodium benzoate. Since a saturated solution is apt to form solids as a result of the evaporation of water or cooling of the ink composition, it is desired that the upper limit be slightly below the saturation concentration, preferably 95 % of the saturation concentration.

The period of time required for the applied ink image to develop a white image depends upon the concentration of sodium benzoate in the ink composition and upon the environment such as a temperature in which the ink receiving surface is placed. Since it is generally desired to shorten such a developing time, it is desirable that the ink composition contain a volatile water-soluble organic solvent such as an alcohol or a ketone. For reasons of safety, ethanol is preferable as the organic solvent. The amount of the water-soluble organic solvent is generally not more than 100 parts by weight, preferably 5 to 80 parts by weight, per 100 parts by weight of the water contained in the ink composition.

The ink composition preferably additionally contains one or more water-soluble polymeric substances capable of reducing the penetrability of the ink composition into paper, cloth or fabric on which patterns or letters of the ink composition is to be formed. Illustrative of suitable polymeric substances are poly(alkylene oxide) such as poly(ethylene oxide), polyvinyl alcohol, sodium poly(acrylic acid), methyl cellulose and carboxymethyl cellulose. Such a polymeric substance may also serve to prevent the occurrence of blurs of the ink images, to prevent the drying of the ink charged in a writing instrument and to improve the shelf life of the writing instrument. The amount of polymeric substance used varies with the kind thereof but is generally 0.001 to 18 parts by weight, preferably 0.01 to 12 parts by weight, per 100 parts by weight of the water contained in the ink composition.

A water-soluble inorganic material, such as potassium nitrate or sodium nitrate, may be incorporated into the ink composition for the purpose of increasing the density of a white color image. Such an inorganic material is used in an amount of generally 0.1 to 25 parts by weight, preferably 0.5 to 18 parts by weight, per 100 parts by weight of the water contained in the ink composition. Sodium nitrate is hygroscopic and may contribute to the prevention of the drying of the ink contained in a writing instrument.

The ink composition according to the present invention is suitably used for a writing instrument having a porous or fibrous tip, such as a felt-tip pen. The ink is contained in an ink tank which is in fluid communication with the tip of the writing instrument. The ink composition is particularly suitably used for an chalk pen used in the field of sewing, embroidery, handicraft, etc. The ink composition may also be utilized as a printing ink by suitably controlling the viscosity thereof.

The following examples will further illustrate the present invention. Parts are by weight.

### Example 1

Sodium benzoate (55 parts) was dissolved in 100 parts of water. In the resulting aqueous solution, 0.5 part of poly(ethylene oxide) having a molecular weight of 600,000 to 1,100,000 was dissolved to obtain an ink composition. This composition was charged in an ink tank of a felt-tip pen. A pattern was drawn on a black fabric with the pen. A clear, white image was formed on the fabric as the water evaporated. This image was able to be erased by wiping with a water-impregnated wet cloth. Similarly, a white ink pattern was formed on a black fabric. The fabric was then allowed to stand in a room for 15 days, whereupon it was found that the white pattern did not disappear.

### Example 2

Sodium benzoate (59 parts) was dissolved in 150 parts of a mixed solvent composed of 100 parts of water and 50 parts of ethanol. In the resulting aqueous solution, 1 part of poly(ethylene oxide) was dissolved to obtain an ink composition. This composition was charged in an ink tank of a felt-tip pen. A pattern was drawn on a black fabric with the pen. A clear, white image was formed on the fabric as the water evaporated. Because of the presence of ethanol, the formation of the white image was facilitated. This image was able to be erased by wiping with a water-impregnated wet cloth. Similarly, a white ink pattern was formed on a black fabric. The fabric was then allowed to stand in a room for 15 days, whereupon it was found that the white pattern did not disappear.

### Example 3

An ink composition having the following formulation was prepared:

| | |
|---|---|
| Water | 100 parts |
| Ethanol | 50 parts |
| Sodium benzoate | 40 parts |
| Poly(ethylene oxide) | 1.2 parts |

### Example 4

An ink composition having the following formulation was prepared:

| | |
|---|---|
| Water | 100 parts |
| Ethanol | 30 parts |
| Sodium benzoate | 55 parts |
| Poly(ethylene oxide) | 0.5 part |

### Example 5

An ink composition having the following formulation was prepared:

| | |
|---|---|
| Water | 100 parts |
| Ethanol | 50 parts |
| Sodium benzoate | 40 parts |
| Sodium nitrate | 5 parts |
| Poly(ethylene oxide) | 1 part |

### Example 6

An ink composition having the following formulation was prepared:

| | |
|---|---|
| Water | 100 parts |
| Ethanol | 50 parts |
| Sodium benzoate | 45 parts |
| Carboxymethyl cellulose | 0.5 part |
| Poly(ethylene oxide) | 1 parts |

### Example 7

An ink composition having the following formulation was prepared:

| | |
|---|---|
| Water | 100 parts |
| Ethanol | 50 parts |
| Sodium benzoate | 30 parts |
| Carboxymethyl cellulose | 1 part |
| Poly(ethylene oxide) | 1 part |

### Example 8

An ink composition having the following formulation was prepared:

| | |
|---|---|
| Water | 100 parts |
| Sodium benzoate | 55 parts |
| Poly(ethylene oxide) | 1 part |

Each of the ink compositions of Examples 3 to 8 was charged in an ink tank of a felt-tip pen in the same manner as described in Example 1. A pattern was drawn on a black fabric with each pen. A clear, white image was formed on the fabric as the water evaporated. When the fabric was allowed to stand in a room for 15 days, the white pattern did not disappear. Each image was able to be erased by wiping with a water-impregnated wet cloth. The poly(ethylene oxide) used in Examples 2 to 8 had a molecular weight similar to that used in Example 1.

## Claims

1. A colorless, transparent ink composition comprising water and sodium benzoate dissolved in the water in an amount of at least 5 parts by weight per 100 parts by weight of the water, said composition giving a white image when applied to an ink receiving surface.

2. An ink composition as set forth in claim 1, wherein the sodium benzoate is present in an amount of at least 15 parts by weight per 100 parts by weight of the water.

3. An ink composition as set forth in claim 1, wherein the sodium benzoate is present in an amount of at least 30 parts by weight per 100 parts by weight of the water.

4. An ink composition as set forth in any one of claims 1 to 3, further comprising a water soluble polymeric substance dissolved in the water.

5. An ink composition as set forth in claim 4, wherein the water soluble polymeric substance is present in an amount of 0.001 to 18 parts by weight per 100 parts by weight of the water.

6. An ink composition as set forth in claim 4 or 5, wherein the water soluble polymeric substance is selected from the group consisting of polyalkylene oxide, polyvinyl alcohol, sodium polyacrylate, methyl cellulose and carboxymethyl cellulose.

7. An ink composition as set forth in any preceding claim, further comprising ethanol in an amount of not more than 100 parts by weight per 100 parts by weight of the water.

8. A writing instrument having a pen tip and an ink tank which contains an ink composition according to any one of preceding claim and which is in fluid communication with said pen tip.

## Patentansprüche

1. Farblose transparente Tintenzusammensetzung, aufweisend Wasser und Natriumbenzoat, gelöst in dem Wasser in einer Menge von zumindest 5 Gewichtsteilen pro 100 Gewichtsteilen des Wassers, wobei die Zusammensetzung ein weißes Bild ergibt, wenn sie auf eine Tinte aufnehmende Oberfläche aufgebracht wird.

2. Tintenzusammensetzung wie in Anspruch 1 ausgeführt, wobei das Natriumbenzoat in einer Menge von zumindest 15 Gewichtsteilen pro 100 Gewichtsteilen des Wassers vorhanden ist.

3. Tintenzusammensetzung wie in Anspruch 1 ausgeführt, wobei das Natriumbenzoat in einer Menge von zumindest 30 Gewichtsteilen pro 100 Gewichtsteilen des Wassers vorhanden ist.

4. Tintenzusammensetzung wie in einem der Ansprüche 1 bis 3 ausgeführt, weiterhin aufweisend eine wasserlösliche polymere Substanz, die in dem Wasser gelöst ist.

5. Tintenzusammensetzung wie in Anspruch 4 ausgeführt, wobei die wasserlösliche polymere Substanz in einer Menge von 0,001 bis 18 Gewichtsteilen pro 100 Gewichtsteilen des Wassers vorhanden ist.

6. Tintenzusammensetzung wie in Anspruch 4 oder 5 ausgeführt, wobei die wasserlösliche polymere Substanz ausgewählt wird aus der Gruppe bestehend aus Polyalkylenoxid, Polyvinylalkohol, Natriumpolyacrylat, Methylcellulose und Carboxymethylcellulose.

7. Tintenzusammensetzung wie in irgendeinem der vorhergehenden Ansprüche ausgeführt, weiterhin aufweisend Ethanol in einer Menge von nicht mehr als 100 Gewichtsteilen pro 100 Gewichtsteilen des Wassers.

8. Schreibinstrument, welches eine Schreibspitze und einen Tintentank hat, der eine Tintenzusammensetzung gemäß irgendeinem der vorhergehenden Ansprüche enthält und in Strömungsverbindung mit der Schreibspitze steht.

## Revendications

1. Composition d'encre transparente incolore comprenant de l'eau et du benzoate de sodium dissous dans l'eau en une quantité d'au moins 5 parties en masse pour 100 parties en masse d'eau, ladite composition donnant une image blanche quand elle est appliquée à une surface recevant l'encre.

2. Composition d'encre selon la revendication 1 où le benzoate de sodium est présent en une quantité d'au moins 15 parties en masse pour 100 parties en masse d'eau.

3. Composition d'encre selon la revendication 1 où le benzoate de sodium est présent en une quantité d'au moins 30 parties en masse pour 100 parties en masse d'eau.

4. Composition d'encre selon l'une quelconque des revendications 1 à 3 comprenant en outre une substance polymère soluble dans l'eau dissoute dans l'eau.

5. Composition d'encre selon la revendication 4 où la substance polymère soluble dans l'eau est présente en une quantité de 0,001 à 18 parties en masse pour 100 parties en masse d'eau.

6. Composition d'encre selon la revendication 4 ou 5 où la substance polymère soluble dans l'eau est choisie dans le groupe consistant en poly(oxyde d'alkylène), poly(alcool vinylique), polyacrylate de sodium, méthylcellulose et carboxyméthylcellulose.

7. Composition d'encre selon l'une quelconque des revendications précédentes comprenant en outre de l'éthanol en une quantité ne dépassant pas 100 parties en masse pour 100 parties en masse d'eau.

8. Instrument d'écriture ayant une pointe de stylo et un réservoir d'encre qui contient une composition d'encre selon l'une quelconque des revendications précédentes et qui est en communication par fluide avec ladite pointe de stylo.
